# EUROPEAN PATENT APPLICATION

(11) **EP 3 540 612 A1**
(43) Date of publication of application: **18.09.2019**
(21) Application number: 17847762.6
(22) Date of filing: 30.08.2017
(51) Int. Cl.: G06F 17/30

(54) **CLUSTER PROCESSING METHOD AND DEVICE FOR QUESTIONS IN AUTOMATIC QUESTION AND ANSWERING SYSTEM**

(30) Priority: 14.11.2016 CN 201611002092
(71) Applicant: Ping An Technology (Shenzhen) Co., Ltd., Shenzhen, Guangdong 518000 (CN)
(72) Inventor: WANG, Jianzong, Shenzhen Guangdong 518000 (CN); YUAN, Weiqiang, Shenzhen Guangdong 518000 (CN); HAN, Maokun, Shenzhen Guangdong 518000 (CN); XIAO, Jing, Shenzhen Guangdong 518000 (CN)
(74) Representative: dompatent von Kreisler Selting Werner - Partnerschaft von Patent- und Rechtsanwälten mbB
(86) International application number: PCT/CN2017/099708
(87) International publication number: WO 2018/086401

(57) **Abstract**

The present invention provides a method and a device for processing question clustering in an automatic question and answering system. The method comprises: receiving a clustering request input by a writer; acquiring a question set to be clustered from a database of unanswered questions based on the clustering request; performing feature extraction on the question set to be clustered with a text feature extraction algorithm to output a question feature set; determining whether the question feature set meets a preset splitting condition; performing segmenting clustering on the question feature set with a segmenting clustering algorithm if the preset splitting condition is met to output at least two question feature subsets; updating the question feature subsets to a question feature set, and determining whether the question feature set meets the preset splitting condition; and outputting the question feature set as a clustering class cluster if the preset splitting condition is not met. In the method and device for processing question clustering in the automatic question and answering system, the question set to be clustered may be automatically clustered to help the writer understand question consultation requirements and improve the coverage of the written question and answering pairs.

## Description

### FIELD OF THE INVENTION

The present invention relates to the field of text information processing, and more particularly relates to a method and a device for processing question clustering in an automatic question and answering system.

### BACKGROUND OF THE INVENTION

An automatic Question and Answering (QA) system comprehensive applies technologies such as knowledge representation, information retrieval, and natural language processing and is capable of receiving questions inputted by users in a natural language form. That is to say, it is a system that may return concise and accurate answers. Compared with a traditional search engine, the automatic question and answering system has advantages of being more convenient and more accurate, which is a current research hotspot in the field of natural language processing and artificial intelligence.

In the automatic question and answering system, Frequently-Asked Question (FAQ) should be usually preset. The FAQ is used to store at least one question and answering pair. Each question and answering pair comprises questions and answers frequently asked by users. When the user inputs a question, the automatic question and answering system determines whether there are the same questions in the FAQ; if there are the same questions, the corresponding answers in the FAQ are returned to the user directly so as to facilitate the improvement of the processing efficiency and accuracy of the automated question and answering system; if there are no same questions, the corresponding answer cannot be returned directly, and manual response or other processing is required to reduce the processing efficiency and accuracy of the automated question and answering system. Due to the accuracy and timeliness with which the automatic answering system answers questions, the automatic answering system has greater application in the field of client service or other artificial intelligence. Because the automatic question and answering system is capable of answering timely and accurately on the premise that there are corresponding question and answering pairs in the FAQ, if the question and answering pairs in the FAQ are richer and more extensive in coverage, the answers in the question and answering system are higher in accuracy and better in efficiency. In summary, the writing of the question and answering pairs is the core of the automated question and answering system.

In the existing automatic question and answering system, the question and answering pairs are usually written by writers, and the questions are answered by answerers to form a question and answering pair in which questions are corresponding to answers. Writers usually consider based on factors such as their own experience, knowledge and memory when writing questions, in which there are limitations, so that the questions written by writers has a limited coverage and cannot completely and rapidly cover the questions concerned by users so that the question and answering pairs stored in the FAQ cannot meet user requirements well. Moreover, the process in which writers write questions needs a large amount of manpower cost and time cost, and is inefficient.

### SUMMARY OF THE INVENTION

### Technical problem

The technical problem to be solved in the present invention lies in that, aiming at limited deficiencies in coverage of questions existing in questions written by writers in the existing automatic question and answering system, there is provided a method and a device for processing question clustering in an automatic question and answering system. The coverage of a question design is improved and the intelligent design of question and answering pairs is achieved by performing clustering process on the questions concerned by users.

### Technical solution

The technical solution adopted by the present invention for solving the technical problem is as follows: a method for processing question clustering in an automatic question and answering system, wherein the method comprises:
receiving a clustering request input by a writer;
acquiring a question set to be clustered from a database of unanswered questions based on the clustering request, wherein the question set to be clustered comprises at least one question to be clustered;
performing feature extraction on the question set to be clustered with a text feature extraction algorithm to output a question feature set, wherein the question feature set comprises at least one question feature;
determining whether the question feature set meets a preset splitting condition;
performing segmenting clustering on the question feature set with a segmenting clustering algorithm if the preset splitting condition is met to output at least two question feature subsets; updating the question feature subsets to a question feature set, and determining whether the question feature set meets the preset splitting condition; and
outputting the question feature set as a clustering class cluster if the preset splitting condition is not met.

The present invention further provides a device for processing question clustering in an automatic question and answering system, wherein the device comprises:
a clustering request receiving unit configured to receive a clustering request input by a writer;
a clustering question set acquiring unit configured to acquire a question set to be clustered from a database of unanswered questions based on the clustering request, wherein the question set to be clustered comprises at least one question to be clustered;
a feature extracting unit configured to perform feature extraction on the question set to be clustered with a text feature extraction algorithm to output a question feature set, wherein the question feature set comprises at least one question feature;
a splitting determining unit configured to determine whether the question feature set meets a preset splitting condition;
a first processing unit configured to perform segmenting clustering on the question feature set with a segmenting clustering algorithm when the question feature set meets the preset splitting condition to output at least two question feature subsets; update the question feature subsets to a question feature set, and determine whether the question feature set meets the preset splitting condition; and
a second processing unit configured to output the question feature set as a clustering class cluster when the question feature set does not meets the preset splitting condition.

The present invention further provides a computer-readable storage medium in which a computer program is stored, wherein the computer program, when being executed by a processor, implements the steps of:
receiving a clustering request input by a writer;
acquiring a question set to be clustered from a database of unanswered questions based on the clustering request, wherein the question set to be clustered comprises at least one question to be clustered;
performing feature extraction on the question set to be clustered with a text feature extraction algorithm to output a question feature set, wherein the question feature set comprises at least one question feature;
determining whether the question feature set meets a preset splitting condition;
performing segmenting clustering on the question feature set with a segmenting clustering algorithm if the preset splitting condition is met to output at least two question feature subsets; updating the question feature subsets to a question feature set, and determining whether the question feature set meets the preset splitting condition; and
outputting the question feature set as a clustering class cluster if the preset splitting condition is not met.

The present invention further provides a server comprising a memory, a processor, and a computer program stored in the memory and executable on the processor, wherein the processor, when executing the computer program, implements the steps of:
receiving a clustering request input by a writer;
acquiring a question set to be clustered from a database of unanswered questions based on the clustering request, wherein the question set to be clustered comprises at least one question to be clustered;
performing feature extraction on the question set to be clustered with a text feature extraction algorithm to output a question feature set, wherein the question feature set comprises at least one question feature;
determining whether the question feature set meets a preset splitting condition;
performing segmenting clustering on the question feature set with a segmenting clustering algorithm if the preset splitting condition is met to output at least two question feature subsets; updating the question feature subsets to a question feature set, and determining whether the question feature set meets the preset splitting condition; and
outputting the question feature set as a clustering class cluster if the preset splitting condition is not met.

### Beneficial effects

Compared with the prior art, the present invention has the following advantages: in the method and device for processing question clustering in the automatic question and answering system provided by the present invention, a question set to be clustered is acquired from a database of unanswered questions based on the clustering request, and the question set to be clustered is automatically clustered, which may help the writer understand question consultation requirements, improve the coverage of the written question and answering pairs, and improve the overall question and answering performance of the automated question and answering system. In the method and device for processing question clustering in the automatic question and answering system, it is required to determine whether the question feature set after performing feature extraction on the question set to be clustered meets a preset splitting condition, and perform segmenting clustering with a segmenting clustering algorithm when the preset splitting condition is met, and automatically stop segmenting clustering when the preset splitting condition is not met, so as to meet the application scenario in which the question feature set dynamically changes and achieve a hierarchical clustering process. It may be ensured that the output questions inside the clustering class cluster are relatively similar, a better clustering effect is obtained, and the tedious operation of manually adjusting parameters is avoided.

### BRIEF DESCRIPTION OF THE DRAWINGS

The present invention will be further described with reference to the accompanying drawings and embodiments, in which:
FIG. 1 is a flow chart of a method for processing question clustering in an automatic question and answering system according to Embodiment 1 of the present invention;
FIG. 2 is a schematic block diagram of a device for processing question clustering in an automatic question and answering system according to Embodiment 2 of the present invention;
FIG. 3 is a schematic diagram of a server provided by an embodiment of the present invention.

**Description of symbols of the main elements**

| | | | |
|---|---|---|---|
| a clustering request receiving unit | 10 | a first determining unit | 41 |
| a clustering question set acquiring unit | 20 | a second determining unit | 42 |
| a feature extracting unit | 30 | a first processing unit | 50 |
| a feature extracting subunit | 31 | a second processing unit | 60 |
| a feature mapping subunit | 32 | a preprocessing unit | 70 |
| a splitting determining unit | 40 | a matching processing unit | 80 |

### DETAILED DESCRIPTION OF THE PREFERRED EMBODIMENTS

In order to make the technical features, the purposes and the effects of the present invention be clearer and more understandable, the embodiments of the present invention will be described in detail with reference to the accompanying drawings.

### Embodiment 1

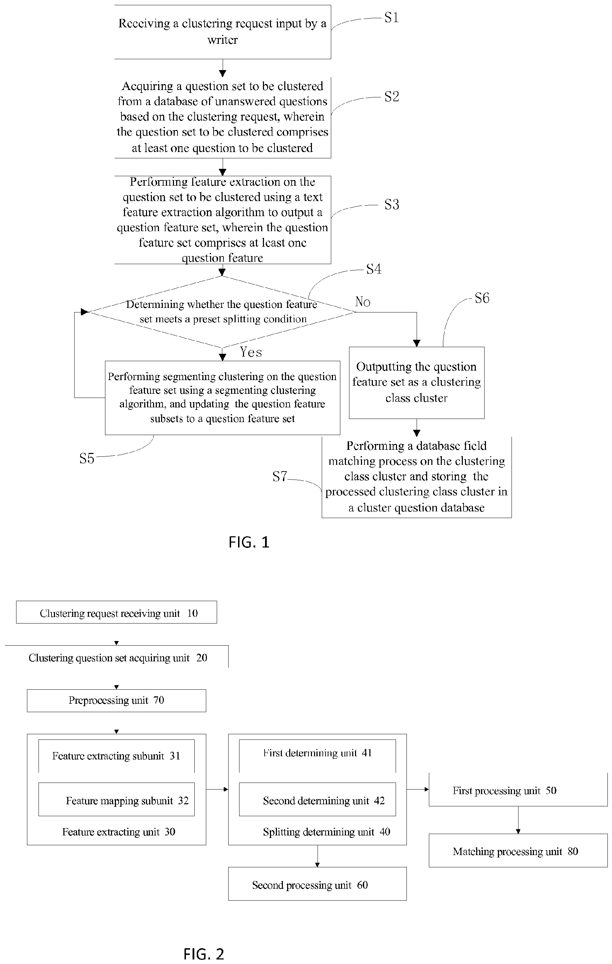

FIG. 1 shows a method for processing question clustering in an automatic question and answering system in the present embodiment. The automatic question and answering system comprises a server, a client terminal communicatively connected with the server, and a background service terminal, wherein the FAQ is stored on the server. The client terminal is configured to receive questions inputted by a client in a natural language form or other forms, send the questions to the server, and receive and display the answers fed back by the server. The server is configured to query whether there are corresponding question and answering pairs in the FAQ based on the questions sent by the client terminal; if there are corresponding question and answering pairs, the server sends the answers to the client terminal; if there are no corresponding question and answering pairs, the server should send the answers to the background service terminal, receive the answers sent by the background service terminal, and send the answers to the client terminal. The background service terminal is not only configured to receive and display the questions input by the writers, but also to receive and display the questions sent by the server, receive the answers inputted by the answerers and upload the answers to the server. In the method for processing question clustering in the automatic question and answering system provided by the present embodiment, the questions uploaded by clients to the server are clustered, so that the writers understand consultation requirements of clients more so as to improve the question and answering pair in the FAQ of the automated question and answering system, and improve the overall question and answering performance of the automated question and answering system, wherein clustering refers to the process in which the collection of physical or abstract objects is classified into a plurality of classes consisting of similar objects; and the classes consisting of similar objects are clustering class clusters.

The method for processing question clustering in an automatic question and answering system comprises the following steps.

S1: A clustering request input by a writer is received. When a writer inputs the clustering request, the automatic question and answering system may acquire the consulting requirements of users based on the clustering request and set questions in the FAQ of the automatic question and answering system. In an embodiment, the background service terminal receives the clustering request output by the writer and sends the clustering request to the server, wherein the clustering request is an HTTP request.

S2: A question set to be clustered is acquired from a database of unanswered questions based on the clustering request, wherein the question set to be clustered comprises at least one question to be clustered. In an embodiment, after receiving the clustering request, the server acquires an unanswered question set from the database of unanswered questions based on the clustering request and outputs as the question set to be clustered, wherein the question set to be clustered comprises at least one question to be clustered. Each question to be clustered is an unanswered question in the automatic question and answering system. In the automatic question and answering system, after the question input by the client in natural language form through a client terminal is uploaded to the server, if there are corresponding question and answering pairs in the FAQ of the server, the answers are directly fed back to the client terminal; if there are no corresponding question and answering pairs in the FAQ of the server, the answers cannot be directly fed back to the client terminal, unanswered labels are added to the corresponding questions, and all the questions carrying unanswered labels are stored in the database of unanswered questions.

In the present embodiment, a question set to be clustered is acquired from a database of unanswered questions based on a clustering request. Since each question to be clustered in the question set to be clustered is an unanswered question that the client uploads through the client terminal and the system does not automatically answer, the question set to be clustered acquired based on the clustering request can better reflect the questions concerned by the client. When the question and answering pair is written based on the question set to be clustered, the coverage of the question and answering pair may be made wider.

In an embodiment, the clustering request may comprise a time range field. When a question set to be clustered is acquired from a database of unanswered questions based on a clustering request, only all the unanswered questions within the time range field of the clustering request are extracted as the question set to be clustered so that the question set to be clustered that has been extracted has timeliness and the writer understands the questions concerned by the client during any period of time through the background service terminal. It may be understood that if the clustering request uploaded by the writer through the background service terminal does not comprise a time range field, all the unanswered questions in the database of unanswered questions are acquired by default as the question set to be clustered.

S3: Feature extraction is performed on the question set to be clustered with a text feature extraction algorithm to output a question feature set, wherein the question feature set comprises at least one question feature. In an embodiment, after acquiring the question set to be clustered from the database of unanswered questions, the server performs feature extraction on the question to be clustered with a text feature extraction algorithm, and may convert questions to be clustered which are stored in a natural language form among the question set to be clustered into a structured question feature set that may be identified and processed by a computer. Each question feature in the question feature set is a text message that may be identified by a computer.

In an embodiment, in an embodiment, the step S3 comprises the following steps.

S31: Feature extraction is performed on the question set to be clustered with a vector space model of an IT-IDF algorithm to output an initial feature set. The IT-IDF (term frequency-inverse document frequency) algorithm is a commonly used weighted algorithm for information retrieval and data mining. In an embodiment, the step S31 comprises the following steps: calculating the term frequency (IT) and the inverse document frequency (IDF) respectively for all terms contained in all the questions to be clustered in the question set to be clustered, then using the term frequency (IT) and inverse document frequency (IDF) to calculate the IT-IDF value, and determining the initial feature set corresponding to the question set to be clustered based on the IT-IDF value. The term frequency (IT) refers to the quotient of the number of times that a term appears in an article and the total number of terms in the article. The inverse document frequency (IDF) refers to the logarithm of the quotient of the total number of documents of the corpus and the number of documents containing the term in the corpus simulating the usage environment of a language. It may be understood that in order to avoid having the denominator 0 (that is to say, all documents in the corpus do not contain the term), the denominator may be the sum of the number of documents containing the term and a constant. The IT-IDF value is the product of the term frequency (IT) and the inverse document frequency (IDF). It may be understood that the higher the IT-IDF value of any term, the more important it is.

S32: Feature mapping is performed on the initial feature set with an LSI model to output the question feature set. Because the vector space model of the IT-IDF algorithm is usually used to represent documents or sentences as a high-dimensional sparse vector, only the IT-IDF algorithm is used to perform feature extraction on the question set to be clustered in the lengthy question texts, and the output initial feature set may not express the feature of the question very well, the LSI model needs to be used to perform feature mapping on the initial feature set to output the final question feature set. The LSI (Latent Semantic Index) model refers to two or more terms appear in a document in a large number, it is then considered that two or more words are semantically related and are calculated by the LSI model so that related words form a potential theme in order to achieve the term clustering and achieve the purpose of dimensionality reduction.

In an embodiment, prior to the step S3, the method further comprises: preprocessing the question set to be clustered with a text preprocessing algorithm, wherein the text preprocessing algorithm comprises at least one of unification of traditional Chinese and simplified Chinese, unification of upper case and lower case, Chinese word segmentation, and stop word removal. Chinese word segmentation refers to the segmentation of a sequence of Chinese characters into a single word. Stop words refers to some characters or words that will be automatically filtered out when natural language data is processed, such as English characters, numbers, numeric characters, identifiers, a single Chinese character that is used at a high frequency, etc. The question to be clustered is preprocessed with a text preprocessing algorithm, which helps save storage space and improve the processing efficiency. In the present embodiment, the effect that the question set to be clustered is preprocessed with a text preprocessing algorithm will directly affect the effect that feature extraction is performed on the question set to be clustered with a text feature extraction algorithm subsequently.

S4: It is determined whether the question feature set meets a preset splitting condition. In an embodiment, after the server performs feature extraction on the question to be clustered with a text feature extraction algorithm and outputs a question feature set, it should be determined whether the question feature set meets a preset splitting condition to determine whether the question feature set can be split into several question feature subsets.

In an embodiment, in an embodiment, the step S4 comprises: determining whether the question feature set can be segmented into at least two question feature subsets based on at least two splitting clustering centers so that the average distance between all points in the question feature set and the original clustering center is greater than the average distance between all points in each feature subset to the splitting cluster center, wherein the preset splitting condition is met if the question feature set can be segmented into at least two question feature subsets based on at least two splitting clustering centers, and the preset splitting condition is not met if the question feature set is not capable of being segmented into at least two question feature subsets based on at least two splitting clustering centers, wherein the original clustering center is the clustering center of the question feature set.

In another embodiment, in an embodiment, the step S4 comprises: determining whether the number of question features of the question feature set is greater than a preset splitting number, wherein the preset splitting condition is met if the number of question features of the question feature set is greater than a preset splitting number, and the preset splitting condition is not met if the number of question features of the question feature set is not greater than a preset splitting number. The strategy adopted by the embodiment is to determine whether the number of question features of a question feature set is greater than a preset splitting number. The question feature set may continue splitting only when the number of question features of a question feature set is greater than a preset splitting number. In the present embodiment, the preset splitting number may be the square root of the number of all the questions in the database of unanswered questions.

S5: Segmenting clustering is performed on the question feature set with a segmenting clustering algorithm if the preset splitting condition is met to output at least two question feature subsets; the question feature subsets are updated to a question feature set, and it is determined whether the question feature set meets the preset splitting condition. When determining that the question feature set meets the preset splitting condition, the server uses a segmenting clustering algorithm such as a K-means algorithm, a K-medoids algorithm and a CLARANS algorithm to perform segmenting clustering on the question feature set so as to segment the question feature set into at least two question feature subsets, and update any of the question feature subsets to the question feature set. The step S4 is repeated.

In the method for processing question clustering in an automatic question and answering system provided in the present embodiment, the question feature in the feature set is a short text. When segmenting clustering is performed on the question feature set using the K-means algorithm, the value of K is 2. After the question feature set is segmented into two question feature subsets and each of the question feature subsets is updated as a question feature set each time, the step S4 is repeatedly performed. In the K-means algorithm, the value of K usually needs to be specified in advance, and cannot be dynamically adjusted during operation. However, the question set to be clustered acquired based on the clustering request dynamically changes, and its corresponding question feature set also changes dynamically. The value of K specified in advance cannot be adapted to the dynamically changing question feature set; therefore, in this embodiment, it should be determined first whether the question feature set meets a preset splitting condition. The segmentation clustering is performed using the K-means algorithm only when the preset splitting condition is met so as to meet the requirement that the question feature set changes dynamically.

S6: The question feature set is output as a clustering class cluster if the preset splitting condition is not met. When determining that the question set does not meet the preset splitting condition, the server outputs the question feature set as a clustering class cluster to the background service terminal, wherein the clustering class cluster is a question of the smallest unit. After the clustering class cluster is sent to the background service terminal, the background service terminal receives and displays the clustering class cluster so that the writer may understand the consulting requirements of the client based on the clustering class cluster more clearly, design a new question and answering pair, and store the question and answering pair in the FAQ.

S7: A database field matching process is performed on the clustering class cluster and the processed clustering class cluster is stored in a cluster question database. After the question set to be clustered is preprocessed with a text preprocessing algorithm and feature extraction is performed on the question set to be clustered with a text feature extraction algorithm, the output clustering class cluster is different from the text form of a question to be clustered acquired from a database of unanswered questions. The clustering class cluster needs to be associated with the question to be clustered, and a database field matching process is performed on the clustering class cluster, so as to process the clustering class cluster into a form consistent with the field in the clustering question database so that it is more convenient and quicker when the clustering class cluster is stored in the clustering question database.

In the method for processing question clustering in the automatic question and answering system provided by the present invention, a question set to be clustered is acquired from a database of unanswered questions based on the clustering request, and the question set to be clustered is automatically clustered, which may help the writer understand question consultation requirements, improve the coverage of the written question and answering pairs, and improve the overall question and answering performance. In the method for processing question clustering in the automatic question and answering system, it is required to determine whether the question feature set after performing feature extraction on the question set to be clustered meets a preset splitting condition, and perform segmenting clustering with a segmenting clustering algorithm when the preset splitting condition is met, and automatically stop segmenting clustering when the preset splitting condition is not met, so as to meet the application scenario in which the question feature set dynamically changes and achieve a hierarchical clustering process. It may be ensured that the output questions inside the clustering class cluster are relatively similar, a better clustering effect is obtained, and the tedious operation of manually adjusting parameters is avoided.

### Embodiment 2

FIG. 2 shows a device for processing question clustering in an automatic question and answering system in the present embodiment. The automatic question and answering system comprises a server, a client terminal communicatively connected with the server, and a background service terminal, wherein the FAQ is stored on the server. The client terminal is configured to receive questions inputted by a client in a natural language form or other forms, send the questions to the server, and receive and display the answers fed back by the server. The server is configured to query whether there are corresponding question and answering pairs in the FAQ based on the questions sent by the client terminal; if there are corresponding question and answering pairs, the server sends the answers to the client terminal; if there are no corresponding question and answering pairs, the server should send the answers to the background service terminal, receive the answers sent by the background service terminal, and send the answers to the client terminal. The background service terminal is not only configured to receive and display the questions input by the writers, but also to receive and display the questions sent by the server, receive the answers inputted by the answerers and upload the answers to the server. In the device for processing question clustering in the automatic question and answering system provided by the present embodiment, the questions uploaded by clients to the server are clustered, so that the writers understand consultation requirements of clients more so as to improve the question and answering pair in the FAQ of the automated question and answering system, and improve the overall question and answering performance of the automated question and answering system, wherein clustering refers to the process in which the collection of physical or abstract objects is classified into a plurality of classes consisting of similar objects; and the classes consisting of similar objects are clustering class clusters. The device for processing question clustering in the automatic question and answering system comprises a clustering request receiving unit 10, a clustering question set acquiring unit 20, a feature extracting unit 30, a splitting determining unit 40, a first processing unit 50, a second processing unit 60, a preprocessing unit 70 and a matching processing unit 80.

The clustering request receiving unit 10 is configured to receive clustering request input by a writer. When a writer inputs the clustering request, the automatic question and answering system may acquire the consulting requirements of users based on the clustering request and set questions in the FAQ of the automatic question and answering system. In an embodiment, the background service terminal receives the clustering request output by the writer and sends the clustering request to the server, wherein the clustering request is an HTTP request.

The clustering question set acquiring unit 20 is configured to acquire a question set to be clustered from a database of unanswered questions based on the clustering request, wherein the question set to be clustered comprises at least one question to be clustered. In an embodiment, after receiving the clustering request, the server acquires an unanswered question set from the database of unanswered questions based on the clustering request and outputs as the question set to be clustered, wherein the question set to be clustered comprises at least one question to be clustered. Each question to be clustered is an unanswered question in the automatic question and answering system. In the automatic question and answering system, after the question input by the client in natural language form through a client terminal is uploaded to the server, if there are corresponding question and answering pairs in the FAQ of the server, the answers are directly fed back to the client terminal; if there are no corresponding question and answering pairs in the FAQ of the server, the answers cannot be directly fed back to the client terminal, unanswered labels are added to the corresponding questions, and all the questions carrying unanswered labels are stored in the database of unanswered questions.

In the present embodiment, a question set to be clustered is acquired from a database of unanswered questions based on a clustering request. Since each question to be clustered in the question set to be clustered is an unanswered question that the client uploads through the client terminal and the system does not automatically answer, the question set to be clustered acquired based on the clustering request can better reflect the questions concerned by the client. When the question and answering pair is written based on the question set to be clustered, the coverage of the question and answering pair may be made wider.

In an embodiment, the clustering request may comprise a time range field. When a question set to be clustered is acquired from a database of unanswered questions based on a clustering request, only all the unanswered questions within the time range field of the clustering request are extracted as the question set to be clustered so that the question set to be clustered that has been extracted has timeliness and the writer understands the questions concerned by the client during any period of time through the background service terminal. It may be understood that if the clustering request uploaded by the writer through the background service terminal does not comprise a time range field, all the unanswered questions in the database of unanswered questions are acquired by default as the question set to be clustered.

The feature extracting unit 30 is configured to perform feature extraction on the question set to be clustered with a text feature extraction algorithm to output a question feature set, wherein the question feature set comprises at least one question feature. In an embodiment, after acquiring the question set to be clustered from the database of unanswered questions, the server performs feature extraction on the question to be clustered with a text feature extraction algorithm, and may convert questions to be clustered which are stored in a natural language form among the question set to be clustered into a structured question feature set that may be identified and processed by a computer. Each question feature in the question feature set is a text message that may be identified by a computer.

In an embodiment, the feature extracting unit 30 comprises a feature extracting subunit 31 and a feature mapping subunit 32.

The feature extracting subunit 31 is configured to perform feature extraction on the question set to be clustered with a vector space model of an IT-IDF algorithm to output an initial feature set. The IT-IDF (term frequency-inverse document frequency) algorithm is a commonly used weighted algorithm for information retrieval and data mining. In an embodiment, the feature extracting subunit 31 is configured to calculate the term frequency (IT) and the inverse document frequency (IDF) respectively for all terms contained in all the questions to be clustered in the question set to be clustered, then use the term frequency (IT) and inverse document frequency (IDF) to calculate the IT-IDF value, and determine the initial feature set corresponding to the question set to be clustered based on the IT-IDF value. The term frequency (IT) refers to the quotient of the number of times that a term appears in an article and the total number of terms in the article. The inverse document frequency (IDF) refers to the logarithm of the quotient of the total number of documents of the corpus and the number of documents containing the term in the corpus simulating the usage environment of a language. It may be understood that in order to avoid having the denominator 0 (that is to say, all documents in the corpus do not contain the term), the denominator may be the sum of the number of documents containing the term and a constant. The IT-IDF value is the product of the term frequency (IT) and the inverse document frequency (IDF). It may be understood that the higher the IT-IDF value of any term, the more important it is.

The feature mapping subunit 32 is configured to perform feature mapping on the initial feature set with an LSI model to output the question feature set. Because the vector space model of the IT-IDF algorithm is usually used to represent documents or sentences as a high-dimensional sparse vector, only the IT-IDF algorithm is used to perform feature extraction on the question set to be clustered in the lengthy question texts, and the output initial feature set may not express the feature of the question very well, the LSI model needs to be used to perform feature mapping on the initial feature set to output the final question feature set. The LSI (Latent Semantic Index) model refers to two or more terms appear in a document in a large number, it is then considered that two or more words are semantically related and are calculated by the LSI model so that related words form a potential theme in order to achieve the term clustering and achieve the purpose of dimensionality reduction.

In an embodiment, the device for processing question clustering in an automatic question and answering system further comprises a preprocessing unit 70 configured to preprocess the question set to be clustered with a text preprocessing algorithm, wherein the text preprocessing algorithm comprises at least one of unification of traditional Chinese and simplified Chinese, unification of upper case and lower case, Chinese word segmentation, and stop word removal. Chinese word segmentation refers to the segmentation of a sequence of Chinese characters into a single word. Stop words refers to some characters or words that will be automatically filtered out when natural language data is processed, such as English characters, numbers, numeric characters, identifiers, a single Chinese character that is used at a high frequency, etc. The question to be clustered is preprocessed with a text preprocessing algorithm, which helps save storage space and improve the processing efficiency. In the present embodiment, the effect that the question set to be clustered is preprocessed with a text preprocessing algorithm will directly affect the effect that feature extraction is performed on the question set to be clustered with a text feature extraction algorithm subsequently.

The splitting determining unit 40 is configured to determine whether the question feature set meets a preset splitting condition. In an embodiment, after the server performs feature extraction on the question to be clustered with a text feature extraction algorithm and outputs a question feature set, it should be determined whether the question feature set meets a preset splitting condition to determine whether the question feature set can be split into several question feature subsets.

In an embodiment, the splitting determining unit 40 may be a first determining unit 41 configured to determine whether the question feature set can be segmented into at least two question feature subsets based on at least two splitting clustering centers so that the average distance between all points in the question feature set and the original clustering center is greater than the average distance between all points in each feature subset to the splitting cluster center, wherein the preset splitting condition is met if the question feature set can be segmented into at least two question feature subsets based on at least two splitting clustering centers, and the preset splitting condition is not met if the question feature set is not capable of being segmented into at least two question feature subsets based on at least two splitting clustering centers, wherein the original clustering center is the clustering center of the question feature set.

In another embodiment, the splitting determining unit 40 may be a second determining unit 42 configured to determine whether the number of question features of the question feature set is greater than a preset splitting number, wherein the preset splitting condition is met if the number of question features of the question feature set is greater than a preset splitting number, and the preset splitting condition is not met if the number of question features of the question feature set is not greater than a preset splitting number. The strategy adopted by the embodiment is to determine whether the number of question features of a question feature set is greater than a preset splitting number. The question feature set may continue splitting only when the number of question features of a question feature set is greater than a preset splitting number. In the present embodiment, the preset splitting number may be the square root of the number of all the questions in the database of unanswered questions.

The first processing unit 50 is configured to perform segmenting clustering on the question feature set with a segmenting clustering algorithm when the question feature set meets the preset splitting condition to output at least two question feature subsets; update the question feature subsets to a question feature set, and determine whether the question feature set meets the preset splitting condition. When determining that the question feature set meets the preset splitting condition, the server uses a segmenting clustering algorithm such as a K-means algorithm, a K-medoids algorithm and a CLARANS algorithm to perform segmenting clustering on the question feature set so as to segment the question feature set into at least two question feature subsets, and update any of the question feature subsets to the question feature set. Jump to the splitting determining unit 40.

In the device for processing question clustering in an automatic question and answering system provided in the present embodiment, the question feature in the feature set is a short text. When segmenting clustering is performed on the question feature set using the K-means algorithm, the value of K is 2. After the question feature set is segmented into two question feature subsets and each of the question feature subsets is updated as a question feature set each time, jump to the splitting determining unit 40. In the K-means algorithm, the value of K usually needs to be specified in advance, and cannot be dynamically adjusted during operation. However, the question set to be clustered acquired based on the clustering request dynamically changes, and its corresponding question feature set also changes dynamically. The value of K specified in advance cannot be adapted to the dynamically changing question feature set; therefore, in this embodiment, it should be determined first whether the question feature set meets a preset splitting condition. The segmentation clustering is performed using the K-means algorithm only when the preset splitting condition is met so as to meet the requirement that the question feature set changes dynamically.

The second processing unit 60 is configured to output the question feature set as a clustering class cluster when the question feature set does not meets the preset splitting condition. When determining that the question set does not meet the preset splitting condition, the server outputs the question feature set as a clustering class cluster to the background service terminal, wherein the clustering class cluster is a question of the smallest unit. After the clustering class cluster is sent to the background service terminal, the background service terminal receives and displays the clustering class cluster. The question feature set may continue splitting only when the number of question features of a question feature set is greater than a preset splitting number. In the present embodiment, the preset splitting number may be the square root of the number of all the questions in the database of unanswered questions.

The matching processing unit 80 is configured to perform a database field matching process on the clustering class cluster and store the processed clustering class cluster in a cluster question database. After the question set to be clustered is preprocessed with a text preprocessing algorithm and feature extraction is performed on the question set to be clustered with a text feature extraction algorithm, the output clustering class cluster is different from the text form of a question to be clustered acquired from a database of unanswered questions. The clustering class cluster needs to be associated with the question to be clustered, and a database field matching process is performed on the clustering class cluster, so as to process the clustering class cluster into a form consistent with the field in the clustering question database so that it is more convenient and quicker when the clustering class cluster is stored in the clustering question database.

In the device for processing question clustering in the automatic question and answering system provided by the present invention, a question set to be clustered is acquired from a database of unanswered questions based on the clustering request, and the question set to be clustered is automatically clustered, which may help the writer understand question consultation requirements, improve the coverage of the written question and answering pairs, and improve the overall question and answering performance. In the device for processing question clustering in the automatic question and answering system, it is required to determine whether the question feature set after performing feature extraction on the question set to be clustered meets a preset splitting condition, and perform segmenting clustering with a segmenting clustering algorithm when the preset splitting condition is met, and automatically stop segmenting clustering when the preset splitting condition is not met, so as to meet the application scenario in which the question feature set dynamically changes and achieve a hierarchical clustering process. It may be ensured that the output questions inside the clustering class cluster are relatively similar, a better clustering effect is obtained, and the tedious operation of manually adjusting parameters is avoided.

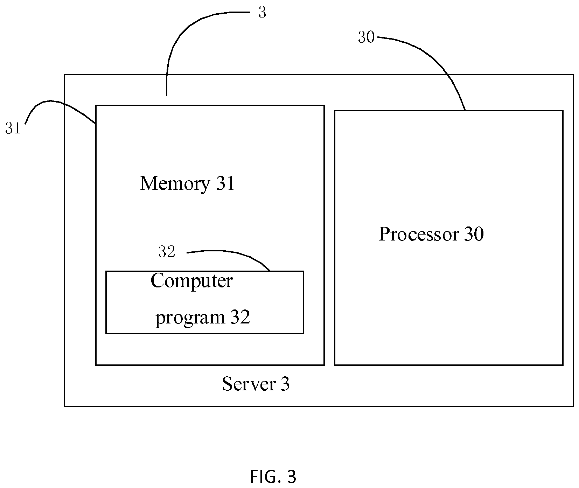

FIG. 3 is a schematic diagram of a server provided by an embodiment of the present invention. As shown in FIG. 3, the server 3 of the embodiment comprises a processor 30, a memory 31, and a computer program 32 stored in the memory 31 and executable on the processor 30, for example, a program executing the method for processing question clustering in an automatic question and answering system described above. The processor 30, when executing the computer program 32, implements the steps in each embodiment of the method for processing question clustering in an automatic question and answering system described above, for example, steps S1 to S7 shown in FIG. 1. Alternatively, the processor 30, when executing the computer program 32, implements the function of each module/unit in each device embodiment described above, for example, the functions of units 10 to 80 shown in FIG. 2.

Exemplarily, the computer program 32 may be segmented into one or more modules/units, which are stored in the memory 31 and executed by the processor 30 to complete the present invention. The one or more modules/units may be a series of computer program instruction segments capable of fulfilling a specific function for describing the execution of the computer program 32 in the server 3.

The server 3 may be a computing device such as a local server, a cloud server etc. The server may comprise, but not limited to, a processor 30 and a memory 31. It may be understood by those skilled in the art that FIG. 3 is merely an example of the server 3 and does not constitute a limitation on the server 3, and may comprise more or fewer components than those shown, or combine certain components or different components. For example, the server may further comprise an input/output device, a network access device, a bus, etc.

The processor 30 may be a Central Processing Unit (CPU) or other general-purpose processors, a Digital Signal Processor (DSP), an Application Specific Integrated Circuit (ASIC), a Field-Programmable Gate Array (FPGA), or other programmable logic devices, a discrete gate or a transistor logic device, a discrete hardware component, etc. The general-purpose processor may be a microprocessor or the processor may also be any of conventional processors, etc.

The memory 31 may be an internal storage unit of the server 3, such as a hard disk or memory of the server 3. The memory 31 may also be an external storage device of the server 3, such as a plug-in hard disk, a Smart Media Card (SMC), a Secure Digital (SD) card, a Flash Card, etc. equipped on the server 3. Further, the memory 31 may further comprise both an internal storage unit and an external storage device of the server 3. The memory 31 is configured to store the computer program and other programs and data required by the server. The memory 31 may also be configured to temporarily store data that has been output or is to be output.

One of ordinary skill in the art of this field may clearly understand that: for a convenient and brief description, the specific working processes of the systems, devices and units described above may refer to the corresponding processes of the foregoing method embodiments, and are not repeated here.

In summary, the foregoing embodiments are merely intended for describing the technical solutions of the present invention, rather than limiting the present invention; although the present invention is described in detail with reference to the foregoing embodiments, it should be understood by those skilled in the art that: the technical solutions described in each of the foregoing embodiments may be still modified or equivalent replacements may be made to a part of the technical features thereof; these modifications or replacements do not make the essence of the corresponding technical solutions depart from the spirit and scope of the technical solutions of each of the embodiments of the present invention.

## Claims

1. A method for processing question clustering in an automatic question and answering system, wherein the method comprises:
receiving a clustering request input by a writer;
acquiring a question set to be clustered from a database of unanswered questions based on the clustering request, wherein the question set to be clustered comprises at least one question to be clustered;
performing feature extraction on the question set to be clustered with a text feature extraction algorithm to output a question feature set, wherein the question feature set comprises at least one question feature;
determining whether the question feature set meets a preset splitting condition;
performing segmenting clustering on the question feature set with a segmenting clustering algorithm if the preset splitting condition is met, to output at least two question feature subsets; updating the question feature subsets to a question feature set, and determining whether the question feature set meets the preset splitting condition; and
outputting the question feature set as a clustering class cluster if the preset splitting condition is not met.

2. The method for processing question clustering in an automatic question and answering system according to claim 1, wherein determining whether the question feature set meets a preset splitting condition comprises:
determining whether the question feature set can be segmented into at least two question feature subsets based on at least two splitting clustering centers so that the average distance between all points in the question feature set and the original clustering center is greater than the average distance between all points in each feature subset to the splitting cluster center, wherein the preset splitting condition is met if the question feature set is capable of being segmented into at least two question feature subsets based on at least two splitting clustering centers, and the preset splitting condition is not met if the question feature set cannot be segmented into at least two question feature subsets based on at least two splitting clustering centers; or
determining whether the number of question features of the question feature set is greater than a preset splitting number, wherein the preset splitting condition is met if the number of question features of the question feature set is greater than a preset splitting number, and the preset splitting condition is not met if the number of question features of the question feature set is not greater than a preset splitting number.

3. The method for processing question clustering in an automatic question and answering system according to claim 1, wherein performing feature extraction on the question set to be clustered with a text feature extraction algorithm to output a question feature set comprises:
performing feature extraction on the question set to be clustered with a vector space model of an IT-IDF algorithm to output an initial feature set; and
performing feature mapping on the initial feature set with an LSI model to output the question feature set.

4. The method for processing question clustering in an automatic question and answering system according to claim 1, prior to performing feature extraction on the question set to be clustered with a text feature extraction algorithm to output a question feature set, further comprising: preprocessing the question set to be clustered with a text preprocessing algorithm, wherein the text preprocessing algorithm comprises at least one of unification of traditional Chinese and simplified Chinese, unification of upper case and lower case, Chinese word segmentation, and stop word removal.

5. The method for processing question clustering in an automatic question and answering system according to claim 1, further comprising: performing a database field matching process on the clustering class cluster and storing the processed clustering class cluster in a cluster question database.

6. A device for processing question clustering in an automatic question and answering system, wherein the device comprises:
a clustering request receiving unit configured to receive a clustering request input by a writer;
a clustering question set acquiring unit configured to acquire a question set to be clustered from a database of unanswered questions based on the clustering request, wherein the question set to be clustered comprises at least one question to be clustered;
a feature extracting unit configured to perform feature extraction on the question set to be clustered with a text feature extraction algorithm to output a question feature set, wherein the question feature set comprises at least one question feature;
a splitting determining unit configured to determine whether the question feature set meets a preset splitting condition;
a first processing unit configured to perform segmenting clustering on the question feature set with a segmenting clustering algorithm when the question feature set meets the preset splitting condition to output at least two question feature subsets; update the question feature subsets to a question feature set, and determine whether the question feature set meets the preset splitting condition; and
a second processing unit configured to output the question feature set as a clustering class cluster when the question feature set does not meets the preset splitting condition.

7. The device for processing question clustering in an automatic question and answering system according to claim 6, wherein the splitting determining unit comprises a first determining unit or a second determining unit;
the first determining unit is configured to determine whether the question feature set can be segmented into at least two question feature subsets based on at least two splitting clustering centers so that the average distance between all points in the question feature set and the original clustering center is greater than the average distance between all points in each feature subset to the splitting cluster center, wherein the preset splitting condition is met if the question feature set can be segmented into at least two question feature subsets based on at least two splitting clustering centers, and the preset splitting condition is not met if the question feature set cannot be segmented into at least two question feature subsets based on at least two splitting clustering centers; and
the second determining unit is configured to determine whether the number of question features of the question feature set is greater than a preset splitting number, wherein the preset splitting condition is met if the number of question features of the question feature set is greater than a preset splitting number, and the preset splitting condition is not met if the number of question features of the question feature set is not greater than a preset splitting number.

8. The device for processing question clustering in an automatic question and answering system according to claim 6, wherein the feature extracting unit comprises:
a feature extracting subunit configured to perform feature extraction on the question set to be clustered with a vector space model of an IT-IDF algorithm to output an initial feature set; and
a feature mapping subunit configured to perform feature mapping on the initial feature set with an LSI model to output the question feature set.

9. The device for processing question clustering in an automatic question and answering system according to claim 6, further comprising a preprocessing unit configured to preprocess the question set to be clustered with a text preprocessing algorithm, wherein the text preprocessing algorithm comprises at least one of unification of traditional Chinese and simplified Chinese, unification of upper case and lower case, Chinese word segmentation, and stop word removal.

10. The device for processing question clustering in an automatic question and answering system according to claim 6, further comprising a matching processing unit configured to perform a database field matching process on the clustering class cluster and store the processed clustering class cluster in a cluster question database.

11. A computer-readable storage medium in which a computer program is stored, wherein the computer program, when being executed by a processor, implements the steps of:
receiving a clustering request input by a writer;
acquiring a question set to be clustered from a database of unanswered questions based on the clustering request, wherein the question set to be clustered comprises at least one question to be clustered;
performing feature extraction on the question set to be clustered with a text feature extraction algorithm to output a question feature set, wherein the question feature set comprises at least one question feature;
determining whether the question feature set meets a preset splitting condition;
performing segmenting clustering on the question feature set with a segmenting clustering algorithm if the preset splitting condition is met to output at least two question feature subsets; updating the question feature subsets to a question feature set, and determining whether the question feature set meets the preset splitting condition; and
outputting the question feature set as a clustering class cluster if the preset splitting condition is not met.

12. The computer-readable storage medium according to claim 11, wherein determining whether the question feature set meets a preset splitting condition comprises:
determining whether the question feature set can be segmented into at least two question feature subsets based on at least two splitting clustering centers so that the average distance between all points in the question feature set and the original clustering center is greater than the average distance between all points in each feature subset to the splitting cluster center, wherein the preset splitting condition is met if the question feature set can be segmented into at least two question feature subsets based on at least two splitting clustering centers, and the preset splitting condition is not met if the question feature set cannot be segmented into at least two question feature subsets based on at least two splitting clustering centers; or
determining whether the number of question features of the question feature set is greater than a preset splitting number, wherein the preset splitting condition is met if the number of question features of the question feature set is greater than a preset splitting number, and the preset splitting condition is not met if the number of question features of the question feature set is not greater than a preset splitting number.

13. The computer-readable storage medium according to claim 11, wherein performing feature extraction on the question set to be clustered with a text feature extraction algorithm to output a question feature set comprises:
performing feature extraction on the question set to be clustered with a vector space model of an IT-IDF algorithm to output an initial feature set; and
performing feature mapping on the initial feature set with an LSI model to output the question feature set.

14. The computer-readable storage medium according to claim 11, prior to performing feature extraction on the question set to be clustered with a text feature extraction algorithm to output a question feature set, further comprising:
preprocessing the question set to be clustered with a text preprocessing algorithm;
the text preprocessing algorithm comprises at least one of unification of traditional Chinese and simplified Chinese, unification of upper case and lower case, Chinese word segmentation, and stop word removal.

15. The computer-readable storage medium according to claim 11, further comprising: performing a database field matching process on the clustering class cluster and storing the processed clustering class cluster in a cluster question database.

16. A server comprising a memory, a processor, and a computer program stored in the memory and executable on the processor, wherein the processor, when executing the computer program, implements the steps of:
receiving a clustering request input by a writer;
acquiring a question set to be clustered from a database of unanswered questions based on the clustering request, wherein the question set to be clustered comprises at least one question to be clustered;
performing feature extraction on the question set to be clustered with a text feature extraction algorithm to output a question feature set, wherein the question feature set comprises at least one question feature;
determining whether the question feature set meets a preset splitting condition;
performing segmenting clustering on the question feature set with a segmenting clustering algorithm if the preset splitting condition is met to output at least two question feature subsets; updating the question feature subsets to a question feature set, and determining whether the question feature set meets the preset splitting condition; and
outputting the question feature set as a clustering class cluster if the preset splitting condition is not met.

17. The server according to claim 16, wherein determining whether the question feature set meets a preset splitting condition comprises:
determining whether the question feature set can be segmented into at least two question feature subsets based on at least two splitting clustering centers so that the average distance between all points in the question feature set and the original clustering center is greater than the average distance between all points in each feature subset to the splitting cluster center, wherein the preset splitting condition is met if the question feature set can be segmented into at least two question feature subsets based on at least two splitting clustering centers, and the preset splitting condition is not met if the question feature set cannot be segmented into at least two question feature subsets based on at least two splitting clustering centers; or
determining whether the number of question features of the question feature set is greater than a preset splitting number, wherein the preset splitting condition is met if the number of question features of the question feature set is greater than a preset splitting number, and the preset splitting condition is not met if the number of question features of the question feature set is not greater than a preset splitting number.

18. The server according to claim 16, wherein performing feature extraction on the question set to be clustered with a text feature extraction algorithm to output a question feature set comprises:
performing feature extraction on the question set to be clustered with a vector space model of an IT-IDF algorithm to output an initial feature set; and
performing feature mapping on the initial feature set with an LSI model to output the question feature set.

19. The server according to claim 16, prior to performing feature extraction on the question set to be clustered with a text feature extraction algorithm to output a question feature set, further comprising: preprocessing the question set to be clustered with a text preprocessing algorithm; the text preprocessing algorithm comprises at least one of unification of traditional Chinese and simplified Chinese, unification of upper case and lower case, Chinese word segmentation, and stop word removal.

20. The server according to claim 16, further comprising: performing a database field matching process on the clustering class cluster and storing the processed clustering class cluster in a cluster question database.
